# EUROPÄISCHE PATENTSCHRIFT

(11) **EP 1 417 015 B1**
(45) Veröffentlichungstag und Bekanntmachung des Hinweises auf die Patenterteilung: **18.10.2006**
(21) Anmeldenummer: 02758473.9
(22) Anmeldetag: 19.08.2002
(51) Int. Cl.: B01D 3/16, B01J 19/30

(54) **KOLONNENBODEN**
COLUMN PLATE
PLATEAU DE COLONNE

(30) Priorität: 17.08.2001 DE 10140352
(43) Veröffentlichungstag der Anmeldung: 12.05.2004
(73) Patentinhaber: QVF Engineering GmbH, 55122 Mainz (DE)
(72) Erfinder: DICHTL, Gottfried, 55268 Nieder-Olm (DE); WALTER, Ulrich, 65510 Idstein (DE)
(74) Vertreter: Friese, Martin
(86) Internationale Anmeldenummer: PCT/EP2002/009253
(87) Internationale Veröffentlichungsnummer: WO 2003/015889

(56) Entgegenhaltungen:
- US-A- 3 259 380
- US-A- 4 427 605
- US-A- 4 820 455
- US-A- 5 514 305

## Beschreibung

Die vorliegende Erfindung betrifft einen Kolonnenboden gemäß dem Oberbegriff von Anspruch 1, einen Boden für einem derartigen Kolonnenboden sowie eine Kolonne mit derartigen Kolonnenböden.

Bei bekannten Kolonnen mit Packungen und/oder Füllkörpern werden diese durch mindestens einen Auf lageboden in der Kolonne gehalten. Auf das Packungs- bzw. Füllkörperbett wird die Flüssigkeit an der Einspeisestelle bzw. der Rücklaufstelle mittels eines Flüssigkeitsverteilerbodens möglichst gleichmäßig verteilt. Die Packungen bzw. die Füllkörper liegen auf dem Auflageboden auf. Die Kolonne weist in der Regel mehrere Packungs- bzw. Füllkörperbetten auf. Zwischen zwei aufeinanderfolgenden Packungs- bzw. Füllkörperbetten muß die Flüssigkeit auf das darunterliegende Bett möglichst gleichmäßig verteilt werden. Um Flüssigkeit beispielsweise auf ein darunterliegendes Bett zu sammeln oder um Flüssigkeit beispielsweise aus der Kolonne zu entnehmen, kommen Flüssigkeitssammler zum Einsatz. Somit kommen bei bekannten Kolonnen mit Packungen und/oder Füllkörper Auflageböden, Flüssigkeitsverteiler, Flüssigkeitswiederverteiler und/oder Flüssigkeitssammler als individuelle Böden zum Einsatz.

Für den korrosionsfesten Anlagenbau werden insbesondere für den Durchmesserbereich von 600 mm bis über 2000 mm Emaillekolonnen verwendet.

Aus konstruktiven Gründen werden die Einbauten für die Kolonnen (Flüssigkeitsverteiler, Flüssigkeitswiederverteiler, Flüssigkeitssammler und Stoffaustauschboden) in anderen Materialien als Stahl/Emaille gefertigt. Eine Ausnahme bilden die Auflageböden. Es sind Auflageböden, die als Schlitzböden ausgebildet sind, und deren Schlitzplatte beidseitig emailliert ist, bekannt. Diese bekannten Auflageböden aus Stahl/Emaille haben bezogen auf den gesamten Kolonnenquerschnitt nur einen freien Querschnitt von ungefähr 40%. Dieser geringe freie Querschnitt hat den erheblichen Nachteil, daß keine hohen Gasbelastungen (F-Faktoren größer als 1,8) und Flüssigkeitsbelastungen (größer als 40 m³/m²h) in der Kolonne gefahren werden können, obwohl das mit moderenen Packungen und Füllkörpern möglich wäre.

Um hohe Gasbelastungen (F-Faktoren größer als 1,8) in der Kolonne fahren zu können, ist es bekannt, Konstruktionen aus Tantal oder Keramik zu verwenden. Keramik hat jedoch gegenüber Glas und Emaille eine geringere Korrosionsfestigkeit. Tantal-Konstruktionen sind im Vergleich zu Stahl/Emaille-Konstuktionen erheblich teurer.

Um bei Kolonnen mit einem hohen Gasdurchsatz große Strömungsquerschnitte für den Gasfluß bereitzustellen, ist es aus der US 4,028,442, die einen Kolonnenboden gemäß dem Oberbegriff von Anspruch 1 zeigt, bekannt, einen nicht ebenen Kolonnenboden für eine Kolonne mit hohem Gasdurchsatz vorzusehen. Um den Strömungsquerschnitt für den Gasdurchsatz zu vergrößern, weist der Kolonnenboden ein Gitter auf, daß wellenförmig bzw. mit schrägen oder senkrechten Abschnitten ausgebildet ist und auf einer Stützstruktur in der Kolonne gelagert wird. Infolge des schrägen bzw. senkrechten Verlaufs des Gitters mit den darin ausgebildeten Öffnungen für den Gasstrom ist der Strömungsquerschnitt größer als bei einer ebenen Ausbildung des Gitters.

Aus der deutschen Offenlegungsschrift Nr. 1 262 225 ist ein Stoffaustauschboden bekannt, bei dem die Glocken in den Boden durch einfaches Eindrücken eingesetzt werden können.

Aus der deutschen Offenlegungsschrift DE 36 04 013 A1 ist ein großformatiger korrosionsfester Stoffaustauschboden bekannt, der aus einem glasfaserverstärkten Kern besteht, der von einem dünnen korrosionsbeständigen Mantel aus PVDF umgeben ist. Im dem Boden sind Bohrungen für Glocken vorgesehen.

Aus der US 5,281,369 sind Kolonnenböden mit einem Gitter bekannt, das wellenförmig ausgebildet ist und auf einer Stützstruktur angeordnet ist. Das Gitter ist dabei derart ausgebildet, daß der Gasstrom durch den Bereich der Wellenberge tritt, während die Flüssigkeit in den Tälern gesammelt und durch kleine Löcher nach unten austritt. Da der Gasstrom und die Flüssigkeitsströmung auf im wesentlichen voneinander getrennten Wegen durch den Kolonnenboden geleitet werden, kann bei gleichem Flüssigkeitsdurchsatz eine höhere Gasstromrate erreicht werden.

Die US-A-3 259 380 zeigt einen Kolonnenboden gemäß dem Oberbegriff von Anspruch 1, der als Flüssigkeitsverteiler verwendbar ist. Die US-A-5 514 305 zeigt einen Kolonnenboden gemäß dem Oberbegriff von Anspruch 1, der als Auflageboden verwendbar ist. Die US-A-4 420 455 zeigt einen Kolonnenboden gemäß dem Oberbegriff von Anspruch 1, der als Flüssigkeitswiederverteiler verwendbar ist.

Die deutsche Offenlegungsschrift DE 29 43 687 A1 und die US-A-4 427 605 offenbaren einen Kolonnenboden gemäß dem Oberbegriff von Anspruch 1. Der dort gezeigte Flüssigkeitssammler hat eine Fläche, die kleiner als der Querschnitt der Kolonne ist, damit neben dem Boden das Gas nach oben durchtreten kann und somit der freie Querschnitt relativ groß ist. Daher muß oberhalb des Flüssigkeitsverteilers ein Sammler vorgesehen werden, um die Flüssigkeit auf den Flüssigkeitsverteiler aufzubringen. Außerdem muß eine Abstützung für den Boden vorgesehen werden.

Diese bekannten Kolonnenböden haben den Nachteil, daß sie nicht ohne erhebliche Kosten aus korrosionsbeständigen Materialien herstellbar sind. Außerdem ist bei einigen der bekannten Kolonnenböden eine Stützstruktur für die Gitter erforderlich.

Der Erfindung liegt daher die Aufgabe zugrunde, einen Kolonnenboden anzugeben, der korrosionsfest ist, leicht und kostengünstig herstellbar ist, der eine hohe Steifigkeit aufweist und mit dem eine hohe Gasstromrate erreichbar ist.

Die Aufgabe der Erfindung wird mit einem Kolonnenboden gemäß den Merkmalen von Anspruch 1 gelöst. Vorteilhafte Ausgestaltungen der Erfindung sind in den abhängigen Ansprüchen angegeben.

Der erfindungsgemäße Kolonnenboden ist einfacher und billiger herstellbar, weil die Ausbildung eines ebenen und somit emaillierbaren Bodens durch die Erhöhung des freien Querschnitts für den Gasdurchtritt in den Aufbauten möglich ist.

Da die Gasdurchtrittslöcher in den Aufbauten ausgebildet sind, besteht die Möglichkeit, den Boden des Kolonnenbodens eben auszubilden. Das hat den Vorteil, daß der Boden mit hochkorrosionsbeständigen Materialien beschichtet werden kann, wie z.B. Emaille und die in den weiteren Ansprüchen angegebenen Kunststoffe. Weiterhin kann der erfindungsgemäße Kolonnenboden auf einfache Weise zwischen zwei Kolonnenschüssen eingespannt werden. Daher kann - aber muß nicht - der Kolonnenboden ohne die bekannte Stützkonstrukion ausgebildet werden.

Es kann erfindungsgemäß möglich sein, daß auch in dem Boden selber weitere Gasdurchtrittslöcher ausgebildet sind. Erfindungsgemäß müssen aber auch Gasdurchtrittslöcher in den Aufbauten ausgebildet sein, um einen hinreichend großen Gasdurchtrittsquerschnitt zu schaffen.

Die Erfindung hat den weiteren Vorteil, daß der Boden des Kolonnenbodens aus Stahl mit einer korrosionsfesten Beschichtung ausgebildet werden kann und die konstruktiv aufwendigeren Aufbauten aus einem korrosionsfesten Kunststoff und/oder aus Glas ausgebildet werden können.

Erfindungsgemäß können die Aufbauten derart ausgebildet sein, daß sie eine Abstützung für eine geordnete Packung bilden, auf der die Packung aufliegt. Die Aufbauten können desweiteren eine Abstützung für mindestens ein Gitter bilden, auf dem die Packung und/oder die Füllkörper aufliegen.

Gemäß einer Ausführung der Erfindung sind die Aufbauten zwischen den Füllkörpern und/oder Packungen der Kolonne eingebettet. Das hat den Vorteil, daß kein oder nur ein sehr geringer Verlust der aktiven Kolonnenhöhe eintritt. Der erfindungsgemäße, als Auflageboden verwendete Kolonnenboden weist vorzugsweise kleine Löcher für den Flüssigkeitsdurchsatz auf, wobei die Füllkörper und Packungen vorzugsweise in den Zwischenräumen zwischen den Aufbauten der Kolonne vorhanden sind und die Aufbauten somit in die Füllkörper- bzw. Packungsschicht hineinreichen.

Gemäß einer Ausführung der Erfindung ist der Kolonnenboden zusätzlich als Flüssigkeitsverteiler, Flüssigkeitswiederverteiler und/oder Flüssigkeitssammler verwendbar. Durch die Doppelfunktion des Kolonnenbodens weist die Kolonne weniger Bauteile auf und ist kostengünstiger. Es lassen sich erfindungsgemäß bei einigen Ausführungen die ansonsten im Kolonnenbau üblichen getrennten Bauteile von Auflagerost, Sammler und Flüssigkeitswiederverteiler in einem Bauteil verbinden.

Gemäß einer Ausführung der Erfindung ist die Fläche des Bodens größer als die Querschnittsfläche der Kolonne. Das hat den Vorteil, daß der Boden zwischen zwei Kolonnenschüsse eingespannt werden kann. Erfindungsgemäß kann die Fläche des Bodens auch gleich der Querschnittsfläche der Kolonne sein. In diesem Fall kann der Boden an dem darüberliegenden Boden angehängt sein oder auf dem darunterliegenden Boden aufliegen.

Gemäß einem Gesichtspunkt der Erfindung ist ein Kolonnenboden, der als Flüssigkeitsverteiler, Flüssigkeitswiederverteiler und/oder Flüssigkeitssammler verwendbar ist, mit einem Boden, Aufbauten und Gasdurchtrittslöchern, die in den Aufbauten vorgesehen und derart ausgebildet sind, daß ihre Öffnungen senkrecht oder schräg zu dem Kolonnenboden verlaufen, dadurch gekennzeichnet, daß der Boden Durchgangslöcher zur Aufnahme der Aufbauten aufweist, und die Fläche des Bodens größer als oder gleich der Querschnittsfläche der Kolonne ist.

Die Ausführung der Erfindung hat den Vorteil, daß in den Aufbauten Gasdurchtrittsöffnungen vorgesehen werden können, um einen hohen freien Querschnitt für den Gasdurchtritt zu erreichen. Daher ist es möglich, den Boden bei einem hinreichenden freien Querschnitt für den Gasdurchtritt bis zu dem Rand der Kolonne auszubilden. Da somit der Kolonnenboden direkt an die Wand der Kolonne anschließt und dort befestigt bzw. eingeflanscht werden kann, weist der erfindungsgemäße Kolonnenboden eine Doppelfunktion auf, d.h. daß die Auflage für den Kolonnenboden entfallen kann. Weiterhin kann der über dem Flüssigkeitsverteiler angeordnete Sammler entfallen, weil sich der Flüssigkeitsverteiler über den gesamten Querschnitt der Kolonne erstreckt.

Gemäß einer Ausführung der Erfindung ist der Kolonnenboden zusätzlich als Auflageboden für Füllkörper und/oder Packungen verwendbar, und die Aufbauten sind derart ausgebildet, daß sie eine Abstützung für mindestens eine Packung und/oder für mindestens ein Gitter bilden, auf dem oder denen Füllkörper aufliegen. Bei dieser Ausführung entfällt durch die Doppelfunktion des Kolonnenbodens ein weiteres Teil, wodurch sich einerseits die aktive Kolonnenhöhe erhöht und sich andererseits die Kosten reduzieren lassen.

Gemäß einer bevorzugten Ausführung der Erfindung ist der Boden des Kolonnenbodens eben ausgebildet. Das hat den Vorteil, daß der Boden einfacher herstellbar und leichter mit einer korrosionsfesten Beschichtung versehbar ist.

Gemäß einer Ausführung der Erfindung sind der Boden und die Aufbauten aus gleichen oder unterschiedlichen korrosionsfesten Materialien oder Materialkombinationen hergestellt.

Bei einer Ausführung der Erfindung weisen die Aufbauten an ihrer Oberseite Schlitze auf.

Gemäß einer Ausführung der Erfindung sind in dem Boden zusätzlich zu den Durchgangslöchern zur Aufnahme der Aufbauten weitere Löcher vorgesehen, die vorzugsweise einen kleineren Querschnitt als die Durchgangslöcher zur Aufnahme der Aufbauten aufweisen. In diesen weiteren Löchern können beispielsweise Verteilertassen angeordnet sein, um den Kolonnenboden als Flüssigkeitsverteiler oder Flüssigkeitswiederverteiler auszubilden. Bei einigen Anwendungsfällen kann es vorteilhaft sein, daß in die Bohrungen der Verteilertassen Verteilerröhrchen durch Verschraubung, durch eine Steckverbindung oder auf andere Weise derart befestigt sind, daß eine zielgerichtete Flüssigkeitsverteilung auf Packungen oder Füllkörper der Kolonne gewährleistbar ist.

Erfindungsgemäß können die Aufbauten Seitenwände aufweisen, die im wesentlichen senkrecht zu dem Kolonnenboden verlaufen, und die Gasdurchtrittslöcher in den Seitenwänden der Aufbauten ausgebildet sein.

Insbesondere können erfindungsgemäß die Gasdurchtrittslöcher als Längsschlitze ausgebildet sein. Dabei können vorzugsweise die Längschlitze jeweils von einer Stelle oberhalb des Flüssigkeitsniveaus, das sich im Betrieb auf dem als Flüssigkeitsverteiler, Flüssigkeitswiederverteiler und/oder Flüssigkeitssammler verwendeten Kolonnenboden ausbilden soll, bis vorzugsweise in den oberen Endbereich des Aufbaus verlaufen. Diese Ausführung der Erfindung bietet sich an, wenn der Kolonnenboden als Flüssigkeitsverteiler oder Flüssigkeitssammler verwendet werden soll. Wenn der erfindungsgemäße Kolonnenboden als Auflageboden verwendet werden soll, erstrecken sich die Längschlitze vorzugsweise über im wesentlichen die gesamte Höhe der Aufbauten.

Erfindungsgemäß können die Seitenwände einen runden, einen kreisförmigen, einen eckigen, einen rechteckigen oder einen quadratischen Aufbauquerschnitt haben, der vorzugsweise dem Querschnitt der Löcher des Bodens entspricht, in denen die Aufbauten angeordnet sind.

Bei einer Ausführung der Erfindung können die Aufbauten Hauben aufweisen, um den Eintritt der Flüssigkeit in die Aufbauten und damit eine Störung des entgegengesetzten Gasstroms zu verhindern. Je nach Anwedungsfall kann die Haube Schlitze aufweisen, um zusätzliche Gasdurchtrittslöcher bereitzustellen.

Um einen hochkorrosionsfesten Kolonnenboden zur Verfügung zu stellen, kann der Boden erfindungsgemäß aus Stahl mit einer Emaille-Beschichtung. Stahl mit einer Beschichtung aus einem korrosionsbeständigen Kunststoff, aus korrosionsfesten Sonderlegierungen oder Tantal oder aus einem korrosionsbeständigen Kunststoff ausgebildet sein. Außerdem können und sollten die Aufbauten ebenfalls korrosionsfest, beispielsweise aus korrosionsbeständigen Kunststoff, aus Glas, aus korrosionsfesten Sonderlegierungen oder Tantal ausgebildet sein. Dabei kann der Kunststoff Polytetrafluorethylen (PTFE), Perfluoralkoxypolymeren (PFA), Polyvinylidenfluorid (PVDF), Polyethylen (PE), einen dazu ähnlichen Kunststoff oder eine Kombination dieser Kunststoffe umfassen.

Erfindungsgemäß kann in mindestens einem Durchgangsloch der Aufbau derart tiefer angeordnet sein, daß dieser Aufbau als Ablaufrohr zu den nächsten tieferen Kolonnenboden einsetzbar ist.

Eine weitere Aufgabe der Erfindung ist es, einen universellen Boden für die erfindungsgemäßen Kolonnenböden zur Verfügung zu stellen, der einfach herzustellen ist.

Diese Aufgabe wird mit den Merkmalen von Anspruch 26 gelöst. Vorteilhafte Ausgestaltungen der Erfindung sind in den abhängigen Ansprüchen angegeben.

Der erfindungsgemäße Boden für einen Kolonnenboden weist Durchgangslöcher zur Aufnahme von passenden und dem jeweiligen Verwendungszweck des Bodens angepaßten Aufbauten auf. Der Boden kann als universeller Boden eingesetzt werden, derart, daß der Boden durch die Aufnahme von passenden und dem jeweiligen Verwendungszweck des Bodens angepaßten Aufbauten als Auflageboden, als Flüssigkeitsverteiler, als Flüssigkeitswiederverteiler, als Flüssigkeitssammler und/oder als Stoffaustauschboden ausbildbar ist. Vorzugsweise weist der Boden Durchgangslöcher größeren Durchmessers und weitere Löcher kleineren Durchmessers auf, die insbesondere jeweils gleichmäßig verteilt sind.

Der erfindungsgemäße Boden hat den Vorteil, daß der Betreiber der Kolonne nur einen universellen Grundboden als Ersatzteil für alle Kolonnenbodenarten auf Vorrat halten muß. Außerdem kann der universelle Boden in größeren Stückzahlen gefertigt werden, wodurch sich die Herstellungskosten reduzieren lassen.

Der erfindungsgemäße universelle Boden kann durch den Einbau von Kaminen in die Durchgangslöcher größeren Durchmessers und den Einbau von Verteilertassen oder Überlauftüllen in die Löcher kleineren Durchmessers als Flüssigkeitsverteiler oder Flüssigkeitswiederverteiler ausgebildet werden.

Weiterhin kann der erfindungsgemäße universelle Boden durch den Einbau von Kaminen in die Durchgangslöcher größeren Durchmessers, durch den Wegfall oder den Verschluß der Löcher kleineren Durchmessers und das Vorsehen mindestens eines Ablaufrohrs als Flüssigkeitssammler ausgebildet werden.

Weiterhin kann der erfindungsgemäße universelle Boden durch den Einbau von mit über im wesentlichen die gesamte Höhe mit Längsschlitzen versehenen Kaminen in die Durchgangslöcher größeren Durchmessers als Auflageboden ausgebildet werden.

Weiterhin kann der erfindungsgemäße universelle Boden durch den Einbau von Verteilertassen oder Überlauftüllen in den weiteren Löchern kleineren Durchmessers als Auflageboden und Flüssigkeitswiederverteiler ausgebildet werden.

Weiterhin kann der erfindungsgemäße universelle Boden durch den Einbau von mindestens einem Ablaufrohr in mindestens einem Durchgangsloch größeren Durchmessers, durch den Wegfall, den Verschluß oder die Anpassung der übrigen Durchgangslöcher größeren Durchmessers mit entsprechenden Einsätzen, durch den Einbau von Glocken in die Löcher kleineren Durchmessers und das Vorsehen mindestens eines Ablaufrohrs als Stoffaustauschboden ausgebildet werden.

Die Erfindung umfaßt auch die Aufbauten zur Nachrüstung und/oder Umrüstung vorhandener Böden unter Herstellung erfindungsgemäßer Böden oder erfindungsgemäßer Kolonnenböden.

Ebenso umfaßt die Erfindung auch eine Kolonne mit mindestens einem erfindungsgemäßen Kolonnenboden und/oder mindestens einem erfindungsgemäßen Boden und/oder mindestens einem erfindungsgemäßen Aufbau.

Die erfindungsgemäße Kolonne kann eine mit Emaille ausgekleidete Kolonne, eine mit korrosionsbeständigen Kunststoffen ausgekleidete Kolonne, eine mit Polytetrafluorethylen (PTFE), Perfluoralkoxypolymeren (PFA), Polyvinylidenfluorid (PVDF), Polyethylen (PE) oder ähnlichen Kunststoffmaterialien ausgekleidete Kolonne, eine Glaskolonne oder eine Kolonne aus hochkorrosionsbeständigen Metallen wie Tantal und Sonderlegierungen sein.

Im folgenden wird die Erfindung anhand der in den Figuren gezeigten Ausführungsbeispiele der Erfindung näher beschrieben:
- Fig. 1: zeigt einen Teilquerschnitt einer Kolonne mit einem erfindungsgemäßen Kolonnenboden entlang der Linie I-I von Fig. 2.
- Fig. 1A: zeigt Details der Einsätze (Verteilertassen) für die kleineren Löcher aus dem Bereich Z von Fig. 1 in Vergrößerung.
- Fig. 2: zeigt eine Querschnittsaufsicht der Kolonne von Fig. 1 entlang der Linie II-II von Fig. 1.
- Fig. 3: zeigt einen Teilquerschnitt einer Kolonne mit einem erfindungsgemäßen Kolonnenboden entlang der Linie III-III von Fig. 4.
- Fig. 4: zeigt eine Querschnittsaufsicht der Kolonne von Fig. 3 entlang der Linie IV-TV von Fig. 3.
- Fig. 5: zeigt einen Teilquerschnitt einer Kolonne mit einem erfindungsgemäßen Kolonnenboden entlang der Linie V-V von Fig. 6.
- Fig. 6: zeigt eine Querschnittsaufsicht der Kolonne von Fig. 5 entlang der Linie VI-VI von Fig. 5.
- Fig. 7: zeigt einen Teilquerschnitt einer Kolonne mit einem erfindungsgemäßen Kolonnenboden entlang der Linie VII-VII von Fig. 8.
- Fig. 8: zeigt eine Querschnittsaufsicht der Kolonne von Fig. 7 entlang der Linie VIII-VIII von Fig. 7.
- Fig. 9: zeigt eine Querschnittsteilansicht durch eine erfindungsgemäße Kolonne mit einem erfindungsgemäßen Auflageboden für eine Packung.
- Fig. 10: zeigt eine Querschnittsteilansicht durch eine erfindungsgemäße Kolonne mit einem erfindungsgemäßen Boden.
- Fig. 11: zeigt eine perspektivische Ansicht eines erfindungsgemäßen Kolonnenbodens, der als Flüssigkeitsverteiler und/oder als Flüssigkeitswiederverteiler verwendbar ist.
- Fig. 12: zeigt eine perspektivische Ansicht eines erfindungsgemäßen Kolonnenbodens, der als Flüssigkeitssammler verwendbar ist.
- Fig. 13: zeigt eine perspektivische Ansicht eines erfindungsgemäßen Kolonnenbodens, der als Auflageboden für eine Packung und/oder Füllkörper verwendbar ist.
- Fig. 14: zeigt eine perspektivische Ansicht eines erfindungsgemäßen Kolonnenbodens, der als Stoffaustauschboden verwendbar ist.

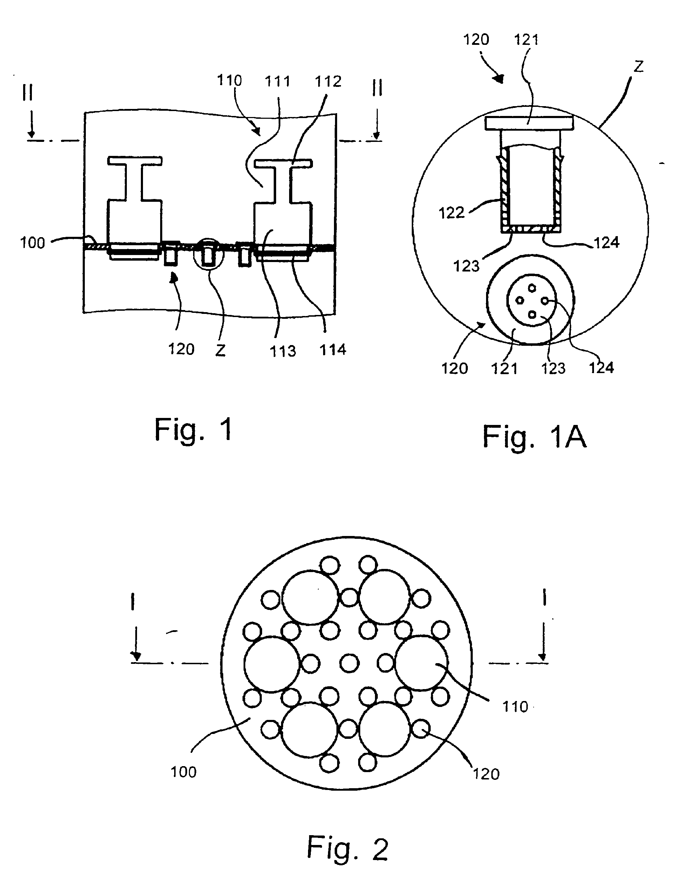

Die Figuren 1 bis 2 zeigen einen erfindungsgemäßen Kolonnenboden, der als Flüssigkeitsverteiler und Flüssigkeitswiederverteiler einsetzbar ist. Fig. 1 zeigt dabei einen Teilquerschnitt einer Kolonne mit einem erfindungsgemäßen Flüssigkeitsverteiler bzw. Flüssigkeitswiederverteiler entlang der Linie I-I von Fig. 2. Der Kolonnenboden weist einen Boden 100 auf. Dieser ist in der Regel durch Einspannen mit Hilfe (nicht dargestellter) Flansche in der Kolonne montiert. Besteht der Boden 100 aus einem mit Emaille oder Kunststoff beschichteten Metall, so muss sich die Beschichtung nicht unbedingt bis zu den eingespannten Rändern bzw. zu Randkanten erstrecken. In dem Boden sind größere Löcher zur Aufnahme der Aufbauten 110 und kleinere Löcher zur Aufnahme von Verteilertassen 120 ausgebildet. Die Aufbauten 110 bestehen im wesentlichen aus einem oben mit einer Haube 112 verschlossenen und unten offenen Zylinder in den oberhalb eines bestimmten Niveaus Längsschlitze ausgebildet sind. Bei der dargestellten Ausführung sind zwei Längsschlitze 111 in dem Aufbau ausgebildet, so daß das verbleibende Zylinderrohr 113 und die Haube 112 nur über zwei Stege miteinander verbunden sind.

Der Aufbau 110 ist mit einer Schraubverbindung oder einer Steckverbindung in dem Boden 100 angebracht. Der Aufbau 110 kann auch auf andere Weise an dem Boden befestigt werden.

Übersichtshalber sind in Fig. 1 die Aufbauten 110 und Verteilertassen 120 weggelassen worden, die nicht auf der Linie I-I von Fig. 1 liegen.

Fig. 1A zeigt eine Verteilertasse aus dem Bereich Z von Fig. 1 in Vergrößerung. Oben in dem Kreis ist ein Querschnitt der Verteilertasse 120 dargestellt. Die Verteilertasse 120 weist einen oberen Rand 121, eine zylindrische Seitenwand 122, einen Bodenabschluß 123 sowie im Boden sowie ggf. am Umfang Austrittsöffnungen 124 auf. Im unteren Teil von Fig. 1A ist eine Ansicht der Verteilertasse 120 von unten dargestellt,

Fig. 2 zeigt eine Querschnittsaufsicht der Kolonne von Fig. 1 entlang der Linie II-II von Fig. 1. In dieser Ansicht erkennt man die Verteilung der Aufbauten 110 und der Verteilertassen 120 besser. Man erkennt, daß die Verteilertassen 120 nahezu gleichmäßig verteilt sind, um eine möglichst homogene Verteilung der Flüssigkeit über den Querschnitt zu schaffen.

Bei der Ausführung gemäß den Figuren 1 bis 2 werden Flüssigkeit und Gas auf dem Kolonnenboden getrennt geführt. Das nach oben strömende Gas wird wenig umgelenkt und durch den Aufbau (Dampf/Gaskamin) nach oben geleitet. Dadurch wird der gasseitige Druckverlust im Bereich des Verteilers auf das Mindestmaß zurückgeführt.

Der Aufbau 110 ist derart gestaltet, daß die Dämpfe/Gase seitlich oberhalb des Flüssigkeitsniveau austreten. Die Aufbauten 110 sind mit einer Haube 112 abgedeckt, um einen Eintritt der von der darüberliegenden Packung kommenden Flüssigkeit zu verhindern. Der im Boden 100 eingesetzte Aufbau 110 (Kamin) weist in seinem unteren Bereich 113 eine geschlossene Zylinderform auf, um ein Anstauen der Flüssigkeit auf dem Boden 100 zu ermöglichen. Die Verteilung der Flüssigkeit über den Kolonnenquerschnitt wird über die Verteilertassen 120 gewährleistet. Die Verteilertassen 120 sind in den kleineren Löchern des Bodens 100 eingesetzt und im Auslaufteil mit Löchern 124 versehen. Die Lochzahl und die Lochdurchmesser wird der Fachmann derart dimensionieren, daß ein Flüssigkeitsstau auf dem Boden 100 gewährleistet wird, um eine gleichmäßige Verteilung über den Kolonnenquerschnitt zu erhalten. Bei geringer Flüssigkeitsbelastung von z.B. B < 2m³/m²h können die Löcher in den Verteilertassen 120 mit zusätzlichen Verteilerröhrchen ausgestattet werden, um eine bessere Verteilung auf die Packung oder Füllkörper zu erhalten.

Es ist auch möglich, Überlauftüllen mit seitlichen Schlitzen oder Löcher oberhalb des Bodens statt der Verteilertassen vorzusehen.

Bei den folgenden Ausführungen wurden die Bezugszeichen der den Bauteilen des ersten Ausführungsbespiels (Figuren 1 bis 2) entsprechenden Bauteile um jeweils 100 hochgezählt.

Bei bestimmten Fahrweisen der Kolonne ist es erforderlich, einen flüssigen Seitenabzug der Kolonne zu entnehmen. Dazu wird ein Flüssigkeitssammler eingesetzt.

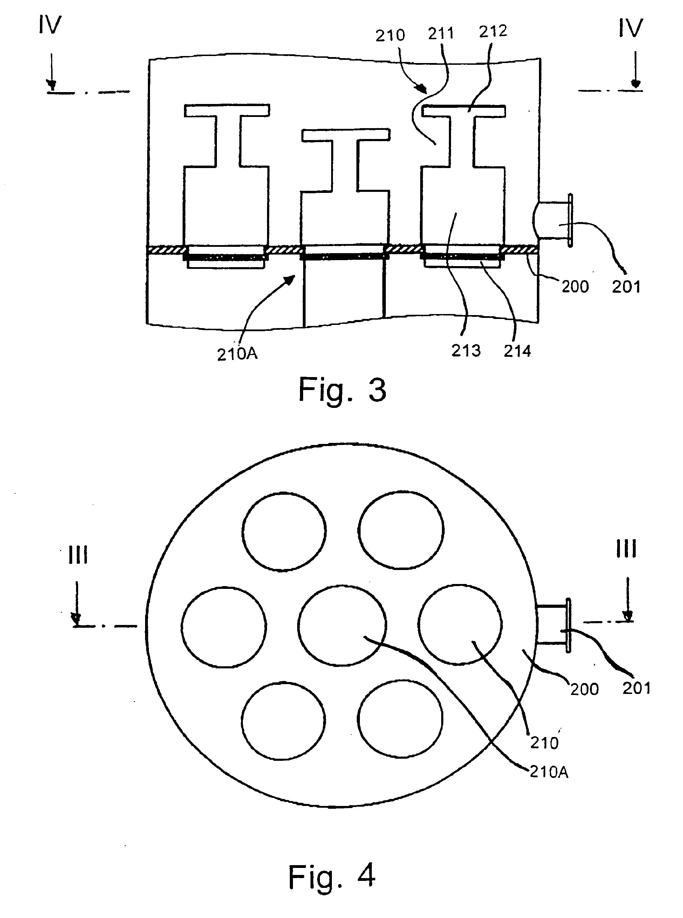

Die Figuren 3 und 4 zeigen einen erfindungsgemäßen Kolonnenboden, der als Flüssigkeitssammler einsetzbar ist. Fig. 3 zeigt einen Teilquerschnitt einer Kolonne mit einem erfindungsgemäßen Flüssigkeitssammler entlang der Linie III-III von Fig. 4, während Fig. 4 eine Querschnittsaufsicht der Kolonne von Fig. 3 entlang der Linie IV-IV von Fig. 3 zeigt.

Der Boden 200 des Kolonnenbodens weist nur Löcher mit großen Durchmesser auf, in denen die Aufbauten 210 aufgenommen werden. Löcher mit kleineren Durchmesser sind nicht vorgesehen.

Die Aufbauten 210 entsprechen den Aufbauten 110 des Ausführungsbeispiels der Figuren 1 bis 2. Die Höhe der geschlossenen Zylinderwand 213 richtet sich nach der Höhe des Stutzens 201 für den Flüssigkeitsablauf aus der Kolonne. Sie ist derart gestaltet, daß eine Totalentnahme der Flüssigkeit vom Boden durchgeführt werden kann.

Die geschlossene zylindrische Höhe eines oder mehrerer (in Abhängigkeit von dem Kolonnendurchmesser) Aufbauten 210A, die mit einem Ablaufrohr ausgestattet sind, ist etwas niedriger als die Höhe der übrigen Aufbauten, um bei einer Teilentnahme der Flüssigkeit aus der Kolonne den Rest über das Ablaufrohr auf den nächsten Boden zu führen.

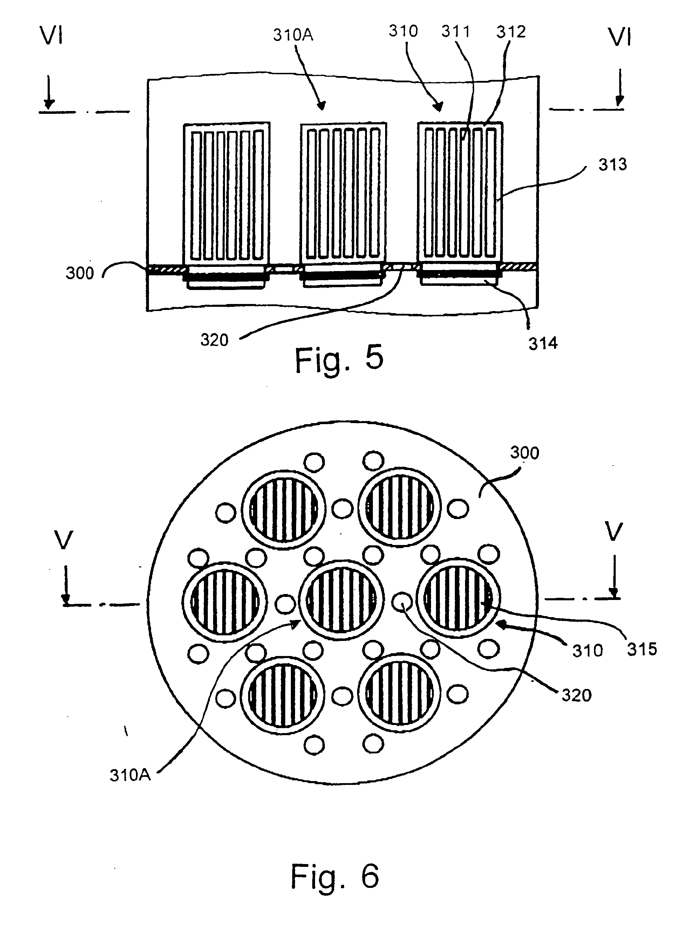

Die Figuren 5 und 6 zeigen einen erfindungsgemäßen Kolonnenboden, der als Auflageboden einsetzbar ist. Fig. 5 zeigt einen Teilquerschnitt einer Kolonne mit einem erfindungsgemäßen Kolonnenboden entlang der Linie V-V von Fig. 6. Fig. 6 zeigt eine Querschnittsaufsicht der Kolonne von Fig. 5 entlang der Linie VI-VI von Fig. 5.

Der Auflageboden gemäß den Figuren 5 und 6 entspricht im wesentlichen der Ausführung gemäß den Figuren 1 bis 2. Die Aufbauten 310 entsprechen im wesentlichen den Aufbauten 110. Durch die Löcher 320 kleineren Durchmessers wird die Flüssigkeit abgeleitet. Durch die Verwendung unterschiedlicher Lochdurchmesser ist es prinzipiell möglich, Gas und Flüssigkeit überwiegend aneinander vorbei zu leiten. Durch Vorsehen von Verteilertassen oder Überlauftüllen in den kleinen Löchern, kann der Kolonnenboden auch als Sammler und Wiederverteiler verwendet werden. Bei der dargestellten Ausführung sind die Aufbauten 310 über annähernd die gesamte zylindrische Höhe geschlitzt, um einen hohen freien Querschnitt bezogen auf den freien Kolonnenquerschnitt zu erhalten. Es kann ein Querschnitt von über 100% erhalten werden, üblicherweise im Bereich von 80 bis 130%, vorzugsweise von 110%.

Die Haube 312 der Aufbauten 310 ist zur Erhöhung des freien Querschnitts in Strömungsrichtung geschlitzt oder gelocht. Die Haube kann bei bestimmten Auführungsformen jedoch auch ganz fehlen. Damit kann ein freier Querschnitt in Strömungsrichtung von 70 bis 97%, vorzugsweise 75 bis 95%, erhalten werden. Durch die erfindungsgemäße Gestaltung des Kolonnenbodens und die Trennung von Gas und Flüssigkeit auf dem Boden wird der gasseitige Druckverlust auf das Mindestmaß reduziert.

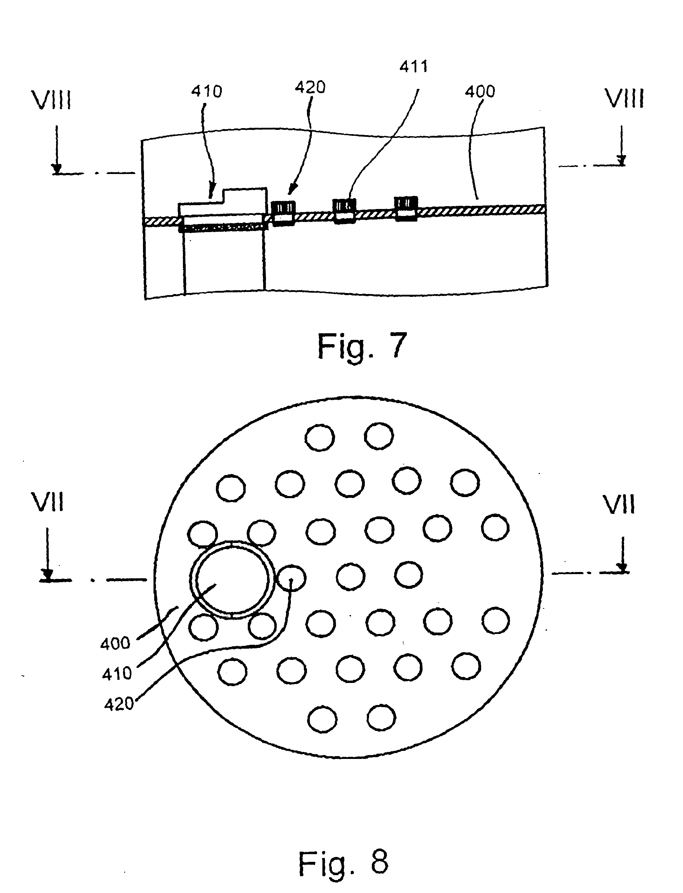

Die Figuren 7 und 8 zeigen einen erfindungsgemäßen Kolonnenboden, der als Stoffaustauschboden einsetzbar ist. Der in den Fig. 7 und 8 gezeigte Kolonnenboden kann dabei auch den Aufbau eines an sich bekannten gefluteten Glockenbodens aufweisen, wobei bei einem erfindungsgemäßen Boden jedoch der Boden und/oder die Aufbauten aus den genannten korrosionsbeständigen Materialien hergestellt sind. Fig.7 zeigt einen Teilquerschnitt einer Kolonne mit einem Stoffaustauschboden entlang der Linie VII-VII von Fig. 8. Der Flüssigkeitsablauf 410 befindet sich dabei auf einem höheren Niveau als das obere Ende der glockenartigen Aufbauten 420 mit schlitzartigen Gasdurchtrittsöffnugnen 411 in ihren Seitenwänden. Fig. 8 zeigt eine Querschnittsaufsicht der Kolonne von Fig. 7 entlang der Linie VIII-VIII von Fig. 7.

In den Löchern des Bodens mit kleinerem Durchmesser sind Glocken 420 eingesetzt, die z.B. aus Kunststoff wie PTFE, PFA, PVDF oder PE und/oder aus Glas ausgebildet sind. Die Glocken 420 sind seitlich geschlitzt und erlauben den Gasdurchtritt in die Flüssigkeitsschicht. Die Flüssigkeit wird quer über den Boden 400 geleitet und über Ablaufrohre 410 dem nächsttieferen Boden zugeführt. Die Ablaufrohre 410 sind z.B. aus Kunststoff oder Glas ausgebildet und werden in Löcher größeren Durchmessers eingesetzt.

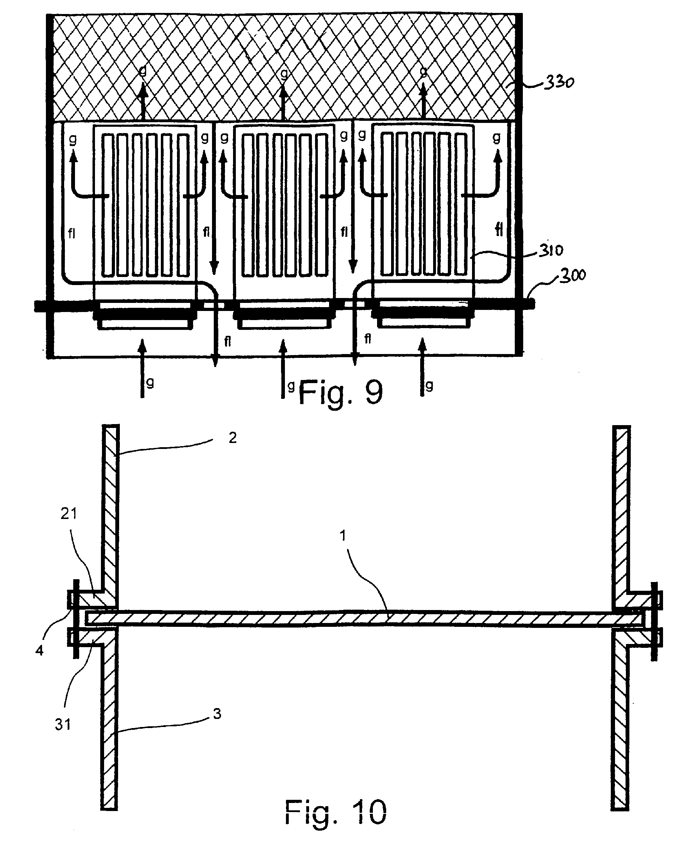

Fig. 9 zeigt eine Querschnittsteilansicht durch eine erfindungsgemäße Kolonne mit einem erfindungsgemäßen Auflageboden für eine Packung. Der Auflageboden entspricht im wesentlichen dem in den Figuren 5 und 6 gezeigten Auflageboden. In Fig. 9 sind außerdem die Packung 330 dargestellt, die oben auf den Aufbauten 310 aufliegt. Die Pfeile g zeigen den Gasströmweg und die Pfeile fl zeigen den Flüssigkeitsströmweg durch den Auflageboden. Es ist erkennbar, daß die Strömwege für die Flüssigkeit und das Gas voneinander getrennt sind. Der freie Querschnitt für den Gasdurchtritt bei den Aufbauten 310 beträgt 120%.

Fig. 10 zeigt eine Querschnittsteilansicht durch eine erfindungsgemäße Kolonne mit einem erfindungsgemäßen Boden 1, aus der der bevorzugte Einbau des erfingsgemäßen Bodens 1 in die Kolonne hervorgeht. Bei dem Boden 1 sind übersichthalber keine Öffnungen eingezeichnet. Der Boden 1 hat eine Fläche, die etwas größer als die Innenquerschnittsfläche der Kolonne ist.

Der Boden 1 ist mit seinem Rand zwischen zwei senkrecht aufeinanderfolgende Außenwandabschnitte 2, 3 der Kolonne eingespannt. An dem oberen Außenwandabschnitt 2 ist ein Flansch 21 vorgesehen und an dem unteren Außenwandabschnitt 3 ist ein Flansch 31 vorgesehen. Die beiden Flansche 21, 31 sind auf eine dem Fachmann bekannte Weise mit beispielsweise einem Bolzen 4 gegeneinander verspannt. Wenn der Boden 1 beispielsweise bis zu einem Bereich emailliert ist, der zwischen die Flansche 21, 31 gespannt ist, und die Außenwandabschnitte 2, 3 eine Innenemaillierung aufweisen, kann die Kolonne hinreichend korrosionsfest ausgebildet werden.

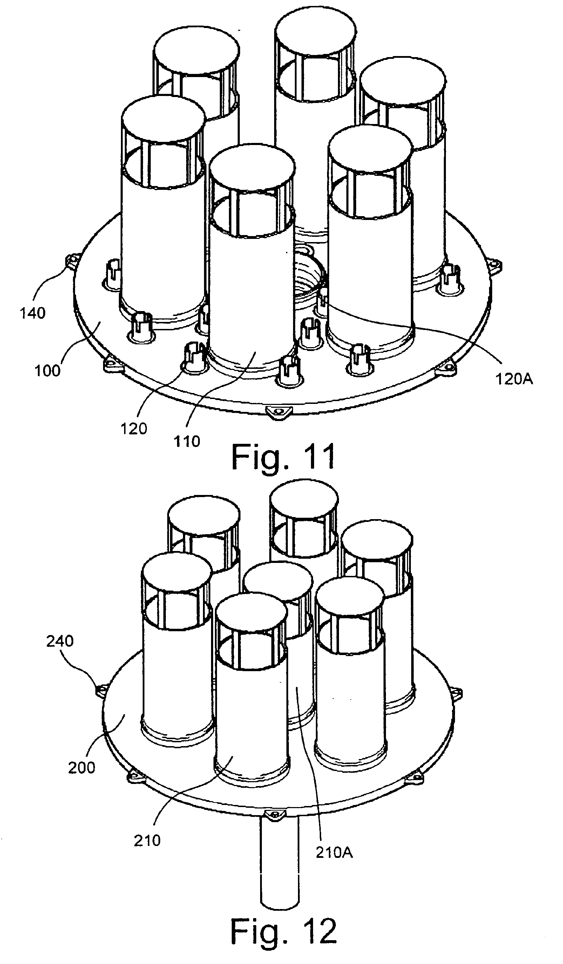

Fig. 11 zeigt eine perspektivische Ansicht eines erfindungsgemäßen Kolonnenbodens, der als Flüssigkeitsverteiler und/oder als Flüssigkeitswiederverteiler verwendbar ist. Der Kolonnenboden entspricht im wesentlichen dem in den Figuren 1 bis 2 gezeigten Kolonnenboden und gleiche Bezugszeichen bezeichnen die entsprechenden Bauteile. Im Unterschied zu dem in den Figuren 1 bis 2 gezeigten Kolonnenboden weist der Kolonnenboden von Fig. 11 in der Mitte eine größere Verteilertasse 120A mit mehreren Löchern im Bodenbereich auf, deren Durchmesser dem Durchmesser der Durchgangslöcher für die Aufbauten 110 entspricht. Das hat den Vorteil, daß der Boden 100 genauso ausgebildet ist, wie der Boden der Ausführungen gemäß den Figuren 12 und 13 bzw. 3 bis 6. Weiterhin sind am Rand des Bodens 100 Laschen 140 für den Transport und den Einbau des Kolonnenbodens in die Kolonne vorgesehen.

Fig. 12 zeigt eine perspektivische Ansicht eines erfindungsgemäßen Kolonnenbodens, der als Flüssigkeitssammler verwendbar ist. Der Kolonnenboden entspricht im wesentlichen dem in den Figuren 3 bis 4 gezeigten Kolonnenboden und gleiche Bezugszeichen bezeichnen die entsprechenden Bauteile. Am Rand des Bodens 200 sind Laschen 240 für den Transport und den Einbau des Kolonnenbodens in die Kolonne vorgesehen.

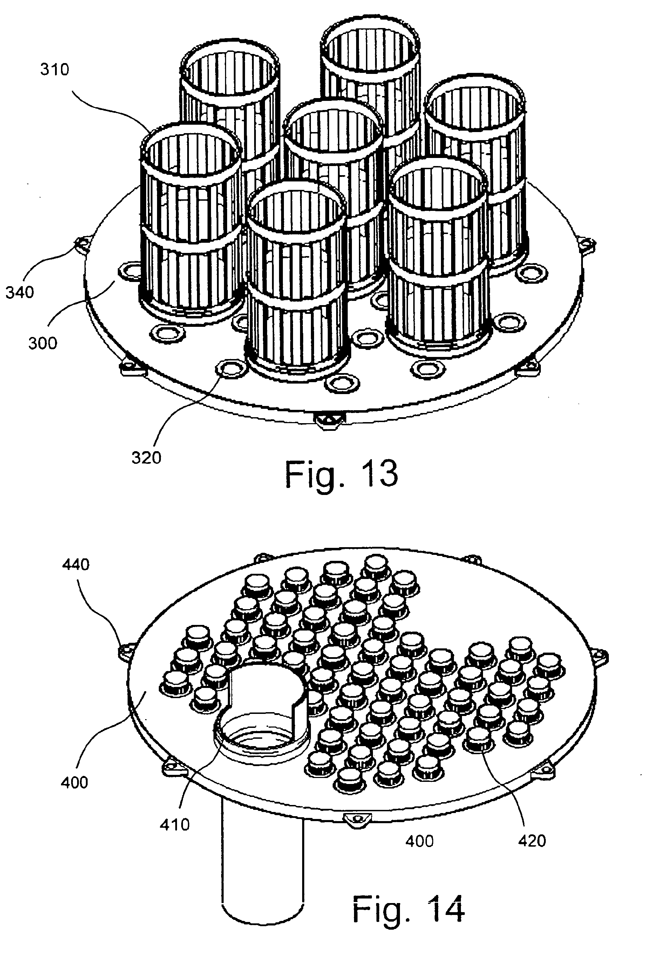

Fig. 13 zeigt eine perspektivische Ansicht eines erfindungsgemäßen Kolonnenbodens, der als Auflageboden für eine Packung und/oder Füllkörper verwendbar ist. Der Kolonnenboden entspricht im wesentlichen dem in den Figuren 5 bis 6 gezeigten Kolonnenboden und gleiche Bezugszeichen bezeichnen die entsprechenden Bauteile. Am Rand des Bodens 300 sind Laschen 340 für den Transport und den Einbau des Kolonnenbodens in die Kolonne vorgesehen.

Fig. 14 zeigt eine perspektivische Ansicht eines erfindungsgemäßen Kolonnenbodens, der als Stoffaustauschboden verwendbar ist. Der Kolonnenboden entspricht im wesentlichen dem in den Figuren 7 bis 8 gezeigten Kolonnenboden und gleiche Bezugszeichen bezeichnen die entsprechenden Bauteile. Am Rand des Bodens 400 sind Laschen 440 für den Transport und den Einbau des Kolonnenbodens in die Kolonne vorgesehen.

Durch die erfindungsgemäße Gestaltung des Kolonnenbodens mit unterschiedlich wählbaren Lochdurchmessern und Variationen der Aufbauten für die Montage auf dem Boden aus Materialien wie PTFE, PFA, PVDF, PE oder Glas usw. kann die Erfindung in unterschiedlichsten Anwendungen zum Betreiben von Kolonnen, vorzugsweise aus Stahl/Emaille, Stahl/PTFE/PFA oder Glas oder hoch korrosionsbeständigen Metallen wie Tantal und Sonderlegierungen, auch bei sehr hoher Gas- und Flüssigkeitsbeslastung, wie sie heute bei der Verwendung von Hochleistungsfüllkörpern und Packungen auftreten können, eingesetzt werden.

Die erfindungsgemäßen Kolonnenböden haben den weiteren Vorteil, daß mit einem universell kombinierbaren korrosionsfesten Grundboden mit passenden Löchern für die Aufnahme von unterschiedlichen Aufbauten sowie ggf. kleineren Löchern für den Flüssigkeitsablauf, in die Verteilertassen eingesetzt werden können, lediglich durch Auswahl der dem jeweiligen Verwendungszweck angepassten Aufbauten und Einsätze, z.B. Aufbauten der in der vorliegenden Anmeldung gezeigten Typen, und eventuell durch Änderung der Mittelbohrung sowie ggf. auch Verschließen der kleinen Bohrungen nach dem Baukastenprinzip die verschiedensten Varianten von korrosionsfesten Kolonnenböden für ganz verschiedene Anwendungszwecke hergestellt werden können. Das senkt die Kosten für die Herstellung und Wartung erheblich. Insbesondere kann der Betreiber dadurch Kosten einsparen, daß nur noch einen Grundboden als Ersatzteil für verschiedene Kolonnenböden wie Auflageböden, Flüssigkeitsverteiler, Flüssigkeitswiederverteiler, Flüssigkeitssammler und Stoffaustauschböden, vorhalten muß.

Somit umfaßt die vorliegende Erfindung auch einen Boden für einen Kolonnenboden, wobei die Fläche des Bodens größer oder gleich dem Querschnitt der Kolonne ausgebildet ist, der Boden Durchgangslöcher zur Aufnahme von passenden und dem jeweiligen Verwendungszweck des Kolonnenbodens angepaßten Einbauten aufweist und der Boden mit einer korrosionsfesten Beschichtung bzw. einem korrosisionsfesten Überzug versehen ist. Vorzugsweise ist der Boden dabei eben ausgebildet und weiter vorzugsweise emailliert oder mit einem PTFE-Kunststoff beschichtet.

Es liegt ferner im Bereich der vorliegenden Erfindung, Aufbauten zur Nachrüstung erfindungsgemäßer Böden oder ggf. passender herkömmlicher Böden, oder zur Umrüstung existierender Böden für einen anderen Zweck, gesondert anzubieten und zu vertreiben, so daß die Erfindung auch die Herstellung, das Anbieten und den Vertrieb von erfindungsgemäß angepassten einzelnen Aufbauten, z.B. von solchen aus Kunststoff und Glas, zur Herstellung erfindungsgemäßer Böden durch den Endverwender erfaßt.

## Patentansprüche

1. Kolonnenboden, der als Auflageboden für Füllkörper und/oder Packungen und/oder geordnete Packungen, als Flüssigkeitsverteiler, als Flüssigkeitswiederverteiler und/oder als Flüssigkeitssammler verwendbar ist, mit einem Boden (100; 200; 300; 400), Gasdurchtrittslöchern (111; 211; 311), die derart ausgebildet sind, daß ihre Öffnungen senkrecht oder schräg zu dem Kolonnenboden verlaufen, und Aufbauten, (110; 210; 210A; 310; 310 A; 420), wobei der Boden (100; 200; 300; 400) Durchgangslöcher zur Aufnahme der Aufbauten (110; 210; 210A; 310; 310 A; 420), aufweist, und die Gasdurchtrittslöcher (111; 211; 311) in den Aufbauten (110; 210; 210A; 310; 310 A; 420) angeordnet sind,
**dadurch gekennzeichnet, daß** der Boden (100; 200; 300; 400) eben ist und aus Stahl mit einer korrosionsfesten Beschichtung und/oder einem korrosionsfesten Überzug ausgebildet ist.

2. Kolonnenboden nach Anspruch 1, **dadurch gekennzeichnet, daß** der Boden aus Stahl mit einer Emaille-Beschichtung oder aus Stahl mit einer Beschichtung aus einem korrosionsbeständigen Kunststoff, aus korrosionsfesten Sonderlegierungen oder Tantal ausgebildet ist.

3. Kolonnenboden nach einem der vorhergehenden Ansprüche, **dadurch gekennzeichnet, daß** die Aufbauten aus korrosionsbeständigen Kunststoff, aus Glas aus korrosionsfesten Sonderlegierungen oder Tantal ausgebildet sind.

4. Kolonnenboden nach einem der beiden vorhergehenden Ansprüche, **dadurch gekennzeichnet, daß** der Kunststoff Polytetrafluorethylen (PTFE), Perfluoralkoxypolymeren (PFA), Polyvinylidenfluorid (PVDF), Polyethylen (PE), einen dazu ähnlichen Kunststoff oder eine Kombination dieser Kunststoffe umfaßt.

5. Kolonnenboden nach einem der vorhergehenden Ansprüche, **dadurch gekennzeichnet, daß** die Aufbauten (310) derart ausgebildet sind, daß sie eine Abstützung für eine geordnete Packung (330) bilden, auf der die Packung aufliegt.

6. Kolonnenboden nach einem der vorhergehenden Ansprüche, **dadurch gekennzeichnet, daß** die Aufbauten eine Abstützung für mindestens ein Gitter (315) bilden, auf dem die Packung (330) und/oder die Füllkörper aufliegen.

7. Kolonnenboden nach einem der vorhergehenden Ansprüche, **dadurch gekennzeichnet, daß** die Aufbauten zwischen den Füllkörpern und/oder Packungen der Kolonne eingebettet sind.

8. Kolonnenboden nach einem der vorhergehenden Ansprüche, **dadurch gekennzeichnet, daß** die Fläche des Bodens (100; 200; 300; 400) größer als oder gleich der Querschnittsfläche der Kolonne ist.

9. Kolonnenboden nach einem der vorhergehenden Ansprüche, **dadurch gekennzeichnet, daß** der Kolonnenboden zusätzlich als Auflageboden für Füllkörper und/oder Packungen verwendbar ist, und die Aufbauten derart ausgebildet sind, daß sie eine Abstützung für mindestens eine Packung und/oder für mindestens ein Gitter bilden, auf dem oder denen Füllkörper aufliegen.

10. Kolonnenboden nach einem der vorhergehenden Ansprüche, **dadurch gekennzeichnet, daß** der Boden (100; 200; 300) eben ausgebildet ist.

11. Kolonnenboden nach einem der vorhergehenden Ansprüche, **dadurch gekennzeichnet, daß** der Boden (100; 200; 300) und die Aufbauten (110; 210, 210A; 310, 310A) aus gleichen oder unterschiedlichen korrosionsfesten Materialien oder Materialkombinationen hergestellt sind.

12. Kolonnenboden nach einem der vorhergehenden Ansprüche, **dadurch gekennzeichnet, daß** die Aufbauten (310A) an ihrer Oberseite Schlitze (315) aufweisen.

13. Kolonnenboden nach einem der vorhergehenden Ansprüche, **dadurch gekennzeichnet, daß** in dem Boden (100; 300) zusätzlich zu den Durchgangslöchern zur Aufnahme der Aufbauten (110; 310; 310A) weitere Löcher (120; 320) vorgesehen sind.

14. Kolonnenboden nach dem vorhergehenden Anspruch, **dadurch gekennzeichnet, daß** die weiteren Löcher (120; 320) einen kleineren Querschnitt als die Durchgangslöcher zur Aufnahme der Aufbauten (110; 310, 310A) aufweisen.

15. Kolonnenboden nach einem der beiden vorhergehenden Ansprüche, **dadurch gekennzeichnet, daß** in den Löchern (120; 320) Verteilertassen angeordnet sind.

16. Kolonnenboden nach dem vorhergehenden Anspruch, **dadurch gekennzeichnet, daß** in die Bohrungen der Verteilertassen Verteilerröhrchen durch Verschraubung, durch eine Steckverbindung oder auf andere Weise derart befestigt sind, daß eine zielgerichtete Flüssigkeitsverteilung auf Packungen oder Füllkörper der Kolonne gewährleistbar ist.

17. Kolonnenboden nach einem der vorhergehenden Ansprüche, **dadurch gekennzeichnet, daß** die Aufbauten (110; 210, 210A; 310, 310A) Seitenwände (113; 213; 313) aufweisen, die im wesentlichen senkrecht zu dem Kolonnenboden verlaufen, und daß die Gasdurchtrittslöcher (111; 211; 311) in den Seitenwänden (113; 213; 313) der Aufbauten (110; 210, 210A; 310, 310A) ausgebildet sind.

18. Kolonnenboden nach einem der vorhergehenden Ansprüche, **dadurch gekennzeichnet, daß** die Gasdurchtrittslöcher (111; 211; 311) als Längsschlitze ausgebildet sind.

19. Kolonnenboden nach dem vorhergehenden Anspruch, **dadurch gekennzeichnet, daß** die Längschlitze jeweils von einer Stelle oberhalb des Flüssigkeitsniveaus, das sich im Betrieb auf dem als Flüssigkeitsverteiler, Flüssigkeitswiederverteiler und/oder Flüssigkeitssammler verwendeten Kolonnenboden ausbilden soll, bis vorzugsweise in den oberen Endbereich des Aufbaus verlaufen.

20. Kolonnenboden nach Anspruch 18, **dadurch gekennzeichnet, daß** die Längschlitze sich über im wesentlichen die gesamte Höhe der Aufbauten erstrecken.

21. Kolonnenboden nach einem der Ansprüche 17 bis 20, **dadurch gekennzeichnet, daß** die Seitenwände (113; 213; 313) einen runden, einen kreisförmigen, einen eckigen, einen rechteckigen oder einen quadratischen Aufbauquerschnitt bilden, der dem Querschnitt der Löcher des Bodens (100; 200; 300; 400) entspricht, in denen die Aufbauten (110; 210, 210A; 310, 310A) angeordnet sind.

22. Kolonnenboden nach einem der vorhergehenden Ansprüche, **dadurch gekennzeichnet, daß** die Aufbauten (110; 210; 210A) Hauben (112; 212) aufweisen.

23. Kolonnenboden nach einem der vorhergehenden Ansprüche, **dadurch gekennzeichnet, daß** in mindestens einem Durchgangsloch der Aufbau (210A; 410) derart tiefer angeordnet ist, daß dieser Aufbau als Ablaufrohr zu den nächsten tieferen Kolonnenboden einsetzbar ist.

24. Boden für einen Kolonnenboden nach einem der vorhergehenden Ansprüche, **dadurch gekennzeichnet, daß** der Boden (100; 200; 300; 400) Durchgangslöcher zur Aufnahme von passenden und dem jeweiligen Verwendungszweck des Bodens angepaßten Aufbauten (110; 210, 210A; 310, 310A; 420) aufweist.

25. Boden nach Anspruch 24, **dadurch gekennzeichnet, daß** dergleiche Boden (100; 200; 300; 400) durch die Aufnahme von passenden und dem jeweiligen Verwendungszweck des Bodens angepaßten Aufbauten als Auflageboden, als Flüssigkeitsverteiler, als Flüssigkeitswiederverteiler, als Flüssigkeitssammler und/oder als Stoffaustauschboden ausbildbar ist.

26. Boden nach Anspruch 24 oder 25, **dadurch gekennzeichnet, daß** der Boden (100; 200; 300; 400) Durchgangslöcher größeren Durchmessers und weitere Löcher kleineren Durchmessers aufweist.

27. Boden nach Anspruch 26, **dadurch gekennzeichnet, daß** der Boden (100) durch den Einbau von Kaminen in die Durchgangslöcher größeren Durchmessers und den Einbau von Verteilertassen oder Überlauftüllen in die Löcher kleineren Durchmessers als Flüssigkeitsverteiler oder Flüssigkeitswiederverteiler ausgebildet ist.

28. Boden nach Anspruch 26, **dadurch gekennzeichnet, daß** der Boden (200) durch den Einbau von Kaminen in die Durchgangslöcher größeren Durchmessers, durch den Wegfall oder den Verschluß der Löcher kleineren Durchmessers und das Vorsehen mindestens eines Ablaufrohrs als Flüssigkeitssammler ausgebildet ist.

29. Boden nach Anspruch 26, **dadurch gekennzeichnet, daß** der Boden (300) durch den Einbau von mit über im wesentlichen die gesamte Höhe mit Längsschlitzen versehenen Kaminen in die Durchgangslöcher größeren Durchmessers als Auflageboden ausgebildet ist.

30. Boden nach Anspruch 29, **dadurch gekennzeichnet, daß** der Boden durch den Einbau von Verteilertassen oder Überlauftüllen in den weiteren Löchern kleineren Durchmessers als Auflageboden und Flüssigkeitswiederverteiler ausgebildet ist.

31. Boden nach Anspruch 26, **dadurch gekennzeichnet, daß** der Boden (400) durch den Einbau von mindestens einem Ablaufrohr in mindestens einem Durchgangsloch größeren Durchmessers, durch den Wegfall, den Verschluß oder die Anpassung der übrigen Durchgangslöcher größeren Durchmessers mit entsprechenden Einsätzen, durch den Einbau von Glocken in die Löcher kleineren Durchmessers und das Vorsehen mindestens eines Ablaufrohrs als Stoffaustauschboden ausgebildet ist.

32. Kolonne mit mindestens einem Kolonnenboden nach einem der Ansprüche 1 bis 23 und/oder mindestens einem Boden nach einem der Ansprüche 24 bis 31.

33. Kolonne nach Anspruch 32, **dadurch gekennzeichnet, daß** die Kolonne eine mit Emaille ausgekleidete Kolonne, eine mit korrosionsbeständigen Kunststoffen ausgekleidete Kolonne, eine mit Polytetrafluorethylen (PTFE), Perfluoralkoxypolymeren (PFA), Polyvinylidenfluorid (PVDF), Polyethylen (PE) oder ähnlichen Kunststoffmaterialien ausgekleidete Kolonne, eine Glaskolonne oder eine Kolonne aus hochkorrosionsbeständigen Metallen wie Tantal und Sonderlegierungen ist.

## Claims

1. Column tray which can be used as a support tray for random packings and/or packings and/or structured packings as a liquid distributor, liquid redistributor and/or liquid collector, comprising a tray (100; 200; 300; 400), gas penetration holes (111; 211; 311) which are formed in such a way that their orifices are perpendicular or inclined to the column tray, and superstructures (110; 210; 210A; 310; 310A; 420), wherein the tray (100; 200; 300; 400) has passages for receiving the superstructures (110; 210; 210A; 310; 310A; 420), and the gas penetration holes (111; 211; 311) are arranged in the superstructures (110; 210; 210A; 310; 310A; 420),
**characterised in that** the tray (100; 200; 300; 400) is flat and is formed from steel with a corrosion-resistant coating and/or a corrosion-resistant covering.

2. Column tray according to claim 1, **characterized in that** the tray is formed from steel with an enamel coating or from steel with a coating of a corrosion-resistant plastic, from corrosion-resistant special alloys or tantalum.

3. Column tray according to any of the preceding claims, **characterized in that** the superstructures are formed from corrosion-resistant plastic, from glass, from corrosion-resistant special alloys or from tantalum.

4. Column tray according to any of the two preceding claims, **characterized in that** the plastic comprises polytetrafluoroethylene (PTFE), perfluoroalkoxy polymers (PFA), polyvinylidene fluoride (PVDF), polyethylene (PE), a plastic similar thereto or a combination of these plastics.

5. Column tray according to any of the preceding claims, **characterized in that** the superstructures (310) are formed in such a way that they form a support for a structured packing (330) on which the packing rests.

6. Column tray according to any of the preceding claims, **characterized in that** the superstructures form a support for at least one grid (315) on which the packing (330) and/or the random packings rest.

7. Column tray according to any of the preceding claims, **characterized in that** the superstructures are embedded between the random packings and/or packings of the column.

8. Column tray according to any of the preceding claims, **characterized in that** the area of the tray (100; 200; 300; 400) is greater than or equal to the cross-sectional area of the column.

9. Column tray according to any of the preceding claims, **characterized in that** the column tray can additionally be used as a support tray for random packings and/or packings, and the superstructures are formed in such a way that they form a support for at least one packing and/or for at least one grid, on which grid or grids random packings rest.

10. Column tray according to any of the preceding claims, **characterized in that** the tray (100; 200; 300) is made flat.

11. Column tray according to any of the preceding claims, **characterized in that** the tray (100; 200; 300) and the superstructures (110; 210, 210A; 310, 310A) are produced from the same or different corrosion-resistant materials or material combinations.

12. Column tray according to any of the preceding claims, **characterized in that** the superstructures (310A) have slots (315) at their top.

13. Column tray according to any of the preceding claims, **characterized in that**, in addition to the passages for receiving the superstructures (110; 310, 310A), further holes (120; 320) are provided in the tray (100; 300).

14. Column tray according to the preceding claim, **characterized in that** the further holes (120; 320) have a smaller crosssection than the passages for receiving the superstructures (110; 310, 310A).

15. Column tray according to any of the two preceding claims, **characterized in that** distributor cups are arranged in the holes (120; 320).

16. Column tray according to the preceding claim, **characterized in that** small distributor tubes are fastened in the bores of the distributor cups by screwing together, by a plug connection or in another manner, in such a way that targeted liquid distribution over packings or random packings of the column can be ensured.

17. Column tray according to any of the preceding claims, **characterized in that** the superstructures (110; 210, 210A; 310, 310A) have side walls (113; 213; 313) which are substantially perpendicular to the column tray, and that the gas penetration holes (111; 211; 311) are formed in the side walls (113; 213; 313) of the superstructures (110; 210, 210A; 310, 310A).

18. Column tray according to any of the preceding claims, **characterized in that** the gas penetration holes (111; 211; 311) are in the form of longitudinal slots.

19. Column tray according to the preceding claim, **characterized in that** the longitudinal slots run in each case from a point above the liquid level, which is to form during operation on the column tray used as a liquid distributor, liquid redistributor and/or liquid collector, preferably to the upper end region of the superstructure.

20. Column tray according to claim 18, **characterized in that** the longitudinal slots extend over substantially the total height of the superstructures.

21. Column tray according to any of claims 17 to 20, **characterized in that** the side walls (113; 213; 313) form a round, a circular, a polygonal, a rectangular or a square superstructure cross-section which corresponds to the cross-section of the holes of the tray (100; 200; 300; 400) in which the superstructures (110; 210, 210A; 310, 310A) are arranged.

22. Column tray according to any of the preceding claims, **characterized in that** the superstructures (110; 210, 210A) have hoods (112; 212).

23. Column tray according to any of the preceding claims, **characterized in that** the superstructure (210A; 410) is arranged lower in at least one passage, in such a way that this superstructure can be used as an outflow pipe to the next lowest column tray.

24. Tray for a column tray according to any of the preceding claims, **characterized in that** the tray (100; 200; 300; 400) has passages for receiving suitable superstructures (110; 210, 210A; 310, 310A; 420) adapted to the respective purpose of the tray.

25. Tray according to Claim 24, **characterized in that**, by holding suitable superstructures adapted to the respective purpose of the tray, the same tray (100; 200; 300; 400) can be formed as a support tray, as a liquid distributor, as a liquid redistributor, as a liquid collector and/or as a mass transfer tray.

26. Tray according to claim 24 or 25, **characterized in that** the tray (100; 200; 300; 400) has passages of relatively large diameter and further holes of relatively small diameter.

27. Tray according to claim 26, **characterized in that** the tray (100) is formed as a liquid distributor or liquid redistributor by installing chimneys in the passages of relatively large diameter and installing distributor cups or overflow bushes in the holes of relatively small diameter.

28. Tray according to Claim 26, **characterized in that** the tray (200) is formed as a liquid collector by installing chimneys in the passages of relatively large diameter, by omitting or closing the holes of relatively small diameter and providing at least one outflow pipe.

29. Tray according to Claim 26, **characterized in that** the tray (300) is formed as a support tray by installing chimneys provided over substantially the total height with longitudinal slots, in the passages of relatively large diameter.

30. Tray according to claim 29, **characterized in that** the tray is formed as a support tray and liquid redistributor by installing distributor cups or overflow bushes in the further holes of relatively small diameter.

31. Tray according to Claim 26, **characterized in that** the tray (400) is formed as a mass transfer tray by installing at least one outflow pipe in at least one passage of relatively large diameter, by omitting, closing or adapting the other passages of relatively large diameter with corresponding inserts, by installing bubble-caps in the holes of relatively small diameter and providing at least one outflow pipe.

32. Column having at least one column tray according to any of Claims 1 to 23 and/or at least one tray according to any of Claims 24 to 31.

33. Column according to Claim 32, **characterized in that** the column is an enamel-lined column, a column lined with corrosion-resistant plastics, a column lined with polytetrafluoroethylene (PTFE), perfluoroalkoxy polymers (PFA), polyvinylidene fluoride (PVDF), polyethylene (PE) or similar plastic materials, a glass column or a column made of highly corrosion-resistant metals, such as tantalum and special alloys.

## Revendications

1. Fond de colonne, qui peut être utilisé comme support pour corps de remplissage et/ou garnitures et/ou garnitures ordonnées, comme distributeur de liquide, redistributeur de liquide et/ou collecteur de liquide, avec un fond (100 ; 200 ; 300 ; 400), orifices de passage de gaz (111 ; 211 ; 311), qui sont formés de sorte que leurs ouvertures sont perpendiculaires ou obliques par rapport au fond de colonne et structures (110 ; 21 ; 210A ; 310 ; 310A ; 420), où le fond présente des orifices de passage pour la réception de la structure (110 ; 21 ; 210A ; 310 ; 310A ; 420), et en ce que les orifices de passage de gaz (111 ; 211 ; 311) sont agencés dans la structure, **caractérisé en ce que** le fond (100 ; 200 ; 300 ; 400) est plat et est formé d'acier avec un revêtement résistant à la corrosion et/ou un enduit résistant à la corrosion.

2. Fond de colonne selon la revendication 1, **caractérisé en ce que** le fond est formé d'acier avec un revêtement en émail ou d'acier avec un revêtement en une matière plastique résistant à la corrosion, en alliages spéciaux ou tantale résistant à la corrosion.

3. Fond de colonne selon l'une des revendications précédentes, **caractérisé en ce que** les structures sont formées en alliages spéciaux ou tantale résistant à la corrosion.

4. Fond de colonne selon l'une des deux revendications précédentes, **caractérisé en ce que** la matière plastique comprend le polytétrafluoroéthylène (PTFE), des polymères perfluoroalcoxy (PFA), le poly(fluorure de vinylidène) (PVDF), le polyéthylène (PE), une matière plastique similaire à ceux-ci ou une combinaison de ces matières plastiques.

5. Fond de colonne selon l'une des revendications précédentes, **caractérisé en ce que** les structures (310) sont formées de sorte qu'elles forment un appui pour une garniture ordonnée (330), sur laquelle se trouve la garniture.

6. Fond de colonne selon l'une des revendications précédentes, **caractérisé en ce que** les structures forment un appui pour au moins une grille (315), sur laquelle repose la garniture (330) et/ou les corps de remplissage.

7. Fond de colonne selon l'une des revendications précédentes, **caractérisé en ce que** les structures sont piégées entre les corps de remplissage et/ou le garniture de la colonne.

8. Fond de colonne selon l'une des revendications précédentes, **caractérisé en ce que** la surface du fond (100 ; 200 ; 300 ; 400) est supérieure ou égale à la coupe transversale de la colonne.

9. Fond de colonne selon l'une des revendications précédentes, **caractérisé en ce que** le fond de colonne peut être utilisé en outre, comme support pour des corps de remplissage et/ou des garnitures et les structures sont formées de sorte qu'elles forment un appui pour au moins une garniture et/ou pour au moins une grille, sur laquelle repose le ou les corps de remplissage.

10. Fond de colonne selon l'une des revendications précédentes, **caractérisé en ce que** le fond (100 ; 200 ; 300) est plan.

11. Fond de colonne selon l'une des revendications précédentes, **caractérisé en ce que** le fond (100 ; 200 ; 300) et les structures (110 ; 210, 210A ; 310, 310A) sont préparées en des matériaux ou combinaisons de matériaux, résistant à la corrosion, identiques ou différents.

12. Fond de colonne selon l'une des revendications précédentes, **caractérisé en ce que** les structure (310A) présentent une rainure (315) sur leur face supérieure

13. Fond de colonne selon l'une des revendications précédentes, **caractérisé en ce que** dans le fond (100 ; 300) sont prévus en plus des orifices de passage, d'autres orifices (120 ; 320) pour la réception des structures (110 ; 310 ; 310A).

14. Fond de colonne selon l'une des revendications précédentes, **caractérisé en ce que** pour la réception des structures (110 ; 310, 310A), les autres orifices (120 : 320) présentent une section plus faible que les orifices de passage.

15. Fond de colonne selon l'une des revendications précédentes, **caractérisé en ce que** des les orifices (120 ; 320), sont agencées des tasses de distribution.

16. Fond de colonne selon l'une des revendications précédentes, **caractérisé en ce que** dans les forages des tasses de distribution, sont fixés des bâtonnets de distribution par vissage, par un cavalier ou d'une autre manière, de sorte qu'une distribution du liquide peut être garantie sur les garnitures ou les corps de remplissage de la colonne.

17. Fond de colonne selon l'une des revendications précédentes, **caractérisé en ce que** les structures (110 ; 210, 210A ; 310, 310A) présentent des parois latérales (113, 213 ; 313), qui se développement de manière essentiellement perpendiculaire au fond de la colonne et **en ce que** les orifices de passage de gaz (111 ; 211 ; 311) sont formés dans les parois latérales (113 ; 213 ; 313) des structures (110 ; 210, 210A ; 310, 310A).

18. Fond de colonne selon l'une des revendications précédentes, **caractérisé en ce que** les orifices de passage de gaz (111 ; 211 ; 311) sont formés comme des rainures longitudinales.

19. Fond de colonne selon l'une des revendications précédentes, **caractérisé en ce que** les rainures longitudinales se développent chaque fois d'un site au-dessus du niveau de liquide, qui doit se former lors du fonctionnement, sur le fond de colonne utilisé comme distributeur de liquide, redistributeur de liquide et/ou collecteur de liquide, jusqu'à de préférence, dans la partie terminale supérieure des structures.

20. Fond de colonne selon la revendication 18, **caractérisé en ce que** les rainures longitudinales s'étendent essentiellement sur toute la hauteur des structures.

21. Fond de colonne selon l'une des revendications 17 à 20, **caractérisé en ce que** les parois latérales (113 ; 213 ; 313) forment une coupe transversale ronde, en croix, carrée, rectangulaire ou quadratique, qui correspond à la coupe transversale des orifices du fond (100 ; 200 ; 300 ; 400), dans lesquels les structures (110 ; 210, 210A ; 310, 310A) sont agencées.

22. Fond de colonne selon l'une des revendications précédentes, **caractérisé en ce que** les structures (110 ; 210, 210A) présentent des calottes (112 ; 212).

23. Fond de colonne selon l'une des revendications précédentes, **caractérisé en ce que** dans au moins un orifice de passage, la structure (210A ; 410) est agencée plus profondément de sorte que cette structure peut être mise en oeuvre comme un tube d'évacuation pour le fond de colonne plus profond voisin.

24. Fond pour un fond de colonne selon l'une des revendications précédentes, **caractérisé en ce que** le fond (100 ; 200 ; 300 ; 400) présente des orifices de passage pour la réception de structures (110 ; 210, 210A ; 310, 310A ; 420) passantes et adaptées à chaque objet d'utilisation du fond.

25. Fond selon la revendication 24, **caractérisé en ce que** ce genre de fond (100 ; 200 ; 300 ; 400) peut être formé par la réception de structures passantes et adaptées à chaque objet d'utilisation du fond, comme fond d'appui, distributeur de liquide, redistributeur de liquide, collecteur de liquide, et/ou fond d'échange de substance.

26. Fond selon la revendication 24 ou 25, **caractérisé en ce que** le fond (100 ; 200 ; 300 ; 400) présente des orifices de passage de plus grand diamètre et d'autres orifices de plus petit diamètre.

27. Fond selon la revendication 26, **caractérisé en ce que** le fond (100) est formé par l'introduction de cheminées dans les orifices de passage de plus grand diamètre et l'incorporation de tasses de distribution ou de tuiles d'écoulement dans les orifices de plus petit diamètre, comme distributeur de liquide ou redistributeur de liquide.

28. Fond selon la revendication 26, **caractérisé en ce que** le fond (200) est formé par l'introduction de cheminées dans les orifices de passage de plus grand diamètre, par l'abandon ou la fermeture des orifices de plus petit diamètre, et par la disposition d'au moins un tube d'évacuation comme collecteur de liquide.

29. Fond selon la revendication 26, **caractérisé en ce que** le fond (300) est formé par l'introduction de cheminées munies de rainures longitudinales, essentiellement sur toute la hauteur, dans les orifices de passage de plus grand diamètre comme fond d'appui.

30. Fond selon la revendication 29, **caractérisé en ce que** le fond est formé par l'introduction de tasses de distribution ou de tuiles d'écoulement dans les autres orifices de plus petit diamètre, comme fond d'appui et redistributeur de liquide.

31. Fond selon la revendication 26, **caractérisé en ce que** le fond (400) est formé par introduction d'au moins un tuyau d'évacuation dans au moins un orifice de passage de plus grand diamètre, par l'abandon, la fermeture ou l'adaptation des orifices de passage restants, de plus grand diamètre avec accessoires appropriés, par l'introduction de dômes dans les orifices de plus petit diamètre et la disposition d'au moins un tube d'évacuation comme fond d'échange de matière.

32. Colonne avec au moins un fond de colonne selon l'une des revendications 1 à 23 et/ou au moins un fond selon l'une des revendications 24 à 31.

33. Colonne selon la revendication 32, **caractérisé en ce que** la colonne est une colonne revêtue d'émail, une colonne revêtue de matières plastiques résistant à la corrosion, une colonne avec un revêtement en polytétrafluoroéthylène (PTFE), polymères perfluoroalcoxy (PFA), poly(fluorure de vinylidène) (PVDF), polyéthylène (PE) ou des matières plastiques similaires, une colonne en verre ou une colonne en des métaux très résistant à la corrosion comme le tantale ou des alliages spéciaux.
